# EUROPÄISCHE PATENTSCHRIFT

(11) **EP 0 361 518 B1**
(45) Veröffentlichungstag und Bekanntmachung des Hinweises auf die Patenterteilung: **07.04.1993**
(21) Anmeldenummer: 89118074.7
(22) Anmeldetag: 29.09.1989
(51) Int. Cl.: G01G 21/22, G01G 21/23

(54) **Plattformwaage**
Platform balance
Balance du type plate-forme

(30) Priorität: 30.09.1988 DE 3833291
(43) Veröffentlichungstag der Anmeldung: 04.04.1990
(73) Patentinhaber: Pfister GmbH, 86165 Augsburg (DE)
(72) Erfinder: Häfner, Hans Wilhelm, D-8890 Aichach-Walchshofen (DE)
(74) Vertreter: Kahler, Kurt, Dipl.-Ing.

(56) Entgegenhaltungen:
- DE-A- 3 544 885
- US-A- 4 453 607
- US-A- 4 483 404

## Beschreibung

Die Erfindung betrifft eine Plattformwaage mit den oberbegrifflichen Merkmalen des Anspruchs 1.

Aus der DE-A-35 44 885 ist eine Kraftmeßeinrichtung bekannt, die im balkenartigen Körper der Kraftmeßzelle zugeordnete Abstützstempel aufweist, die lose in gegenüberliegende Öffnungen eingepaßt sind und somit eine begrenzte Querbeweglichkeit der Waagbrücke erlauben. Diese Kraftmeßzelle ist zum Einbau in Waagen vorgesehen, wobei oberhalb der Kraftmeßzelle diese mittels einer Krafteinleitungsstelle, insbesondere eines Pfannen-/Schneidenlagers von einem Krafteinleitungsteil (Waagbrücke) mit der Meßkraft beaufschlagt wird. Durch diese Übereinanderanordnung von Waagbrücke und Kraftmeßzelle unter Zwischenschaltung einer Lagerstelle, sowie dem funktionsnotwendigen Abstand zwischen Kraftmeßzellen-Körper und Abstützstempel ergibt sich insgesamt eine große Bauhöhe, die insbesondere für in Fahrbahnen eingelassene Waagen nachteilig ist.

Zudem müssen beim Aufbau der Waagen deren Bestandteile montiert und justiert werden, beispielsweise vier derartige Kraftmeßzellen aufgestellt und auf deren obere Lagerstellen die Brücke exakt aufgesetzt werden. Die Ausrichtung und Justage der einzelnen Kraftmeßzellen ist dabei sehr zeitaufwendig, was insbesondere bei an verschiedenen Orten einzusetzenden Waagen wie Achslastwaagen und dergleichen von Nachteil ist.

Aus dem US-Patent 4,483,404 ist eine Plattformwaage mit einer ähnlichen Kraftmeßeinrichtung bekannt, wobei im Unterschied zur DE-A-35 44 885 die säulenartigen Abstützstempel mit ihrem oberen Teil in einer Bohrung eines Scherkraft-Meßwertgebers begrenzt verschwenkbar angeordnet sind. Der untere Teil der Abstützstempel ist in einer topfartigen Abstützplatte eingesetzt, die mit einer Halterung am Meßwertgeber befestigt ist. Obwohl damit gegenüber der DE-A-35 44 885 die Inbetriebnahme der Plattformwaage vereinfacht ist, ist weiterhin von Nachteil, daß die Ausrichtung der Waagbrücke in horizontaler Richtung eine exakte Positionierung der Abstützplatten erfordert, die vor dem Aufsetzen der Waagbrücke vorgenommen werden muß. Außerdem ist nachteilig, daß sich der obere Teil der Abstützstempel in einer nach unten gerichteten Sacklochbohrung abstützt, so daß die Stirnfläche dieser Bohrung, die die Auflagenfläche bildet, äußerst schwer zu bearbeiten ist. Oberflächen-Ungenauigkeiten wirken sich jedoch nachteilig auf das Ansprechverhalten und die Verschleißfestigkeit der Auflagerflächen und damit auf die Meßgenauigkeit aus. Zudem ist zur Abstützung über dieser Auflagerfläche eine bestimmte Materialdicke des Scherkraft-Meßwertgebers erforderlich, so daß bei einer vorgegebenen Höhe des Meßwertgebers der Abstützstempel beträchtlich nach unten herausragt und sich somit eine relativ große Bauhöhe der Plattformwaage über dem Waagenfundament ergibt.

Aus der US-A-4,453,607 ist außerdem eine Plattformwaage bekannt, die mit Scherkraftgebern als Kraftmeßzellen einen ähnlichen Aufbau wie die US-A-4,483,404 aufweist. Hierbei sind jedoch entweder in ein Gewinde am Scherkraftgeber von oben her Schrauben eingesetzt, die keine Querbeweglichkeit ermöglichen oder in einer weiteren Ausführungsform ebenfalls von unten her eingearbeitete Sacklochbohrungen im Scherkraftgeber vorgesehen. In diese Sacklochbohrung wird dann von unten ein relativ kurzer Abstützstempel eingesetzt, der nach oben hin sich gegen eine im Scherkraftgeber von oben eingeschraubte Gegenschraube abstützt. Hierbei muß jedoch der Abstützstempel vor Aufsetzen der Waagbrücke gesondert von unten her eingesetzt werden und kann nicht von oben her eingebaut werden, was einer schnellen Montage und Inbetriebnahme der Plattformwaage hinderlich ist.

Weiterhin ist aus der DE-A-30 43 813 eine Plattformwaage bekannt, bei der die Meßkraftgeber vom Balkentyp im Eckbereich der Wägebrücke angeordnet sind. Dabei sind die Anschlußkabel der vier Meßkraftgeber in einer Schaltdose zusammengeführt, die jedoch innerhalb eines massiven Brückenrahmens angeordnet ist und somit für die Justierung schwer erreichbar ist.

Demzufolge liegt der Erfindung die Aufgabe zugrunde, eine Plattformwaage mit geringer Bauhöhe zu schaffen, deren Inbetriebnahme wesentlich vereinfacht wird. Zudem soll eine hohe Langzeit-Meßgenauigkeit erreicht werden.

Diese Aufgabe wird gelöst durch eine Plattformwaage mit den Merkmalen des Anspruchs 1.

Durch die Ineinanderschachtelung von Abstützstempel und Kraftmeßzellen-Körper ergibt sich eine wesentlich verringerte Bauhöhe, die im wesentlichen nur noch von der für die gewünschte maximale Belastbarkeit der Waage notwendigen Bauhöhe der Kraftmeßzelle selbst bestimmt wird, da auf den durchgehenden Abstand zwischen Kraftmeßzellen - Körper und Abstützbasis verzichtet werden kann. Durch das Einfügen der Abstützstempel in die Kraftmeßzelle als integralen Bestandteil bildet die gesamte Plattformwaage zusammen mit den Kraftmeßzellen und deren Abstützfüßen eine kompakte Baueinheit. Durch die Anordnung des Abstützstempels in einer Durchgangsbohrung und der Abstützung gegen eine von oben aufgesetzte Gegenplatte ist die Auflagerfläche sehr genau herzustellen. Dadurch kann der Abstützstempel in einfacher Weise von oben her eingebaut werden und im Bedarfsfalle schnell ausgetauscht werden. Zudem kann die Gegenplatte gehärtet werden, so daß sich an der Auflagerfläche eine sehr geringe Reibung und damit minimaler Verschleiß im Zusammenwirken mit den Abstützstempeln ergibt.

Diesem Ziel der vereinfachten und beschleunigten Inbetriebnahme der Plattformwaage dient auch die bevorzugte Ausführungsform, wonach der Anschlußkasten für die zentrale Wägedatenerfassung und ggf. -Auswertung für die Kraftmeßzellen an einer seitlichen Umfangsfläche der Plattformwaage schubladenartig herausziehbar ist. Damit ist ein Abgleich und eine Justage der Kraftmeßzellen ohne bisher nötiges Auseinanderbauen der Plattformwaage auf besonders einfache Weise möglich. Der damit vereinfachte Zugriff, z.B. zum Einlöten von Abgleichelementen, gewährleistet eine schnelle Inbetriebnahme selbst nach Umbau der Waage, wobei zugleich die geschützte Lage der Meßelektrik und -elektronik unterhalb der Waagbrücke sichergestellt ist.

Durch die Anordnung wenigstens eines elastischen Ringes am zylindrischen Abstützfuß wird eine zuverlässige Abdichtung der beweglichen Teile, insbesondere des Abstützstempels erreicht. Damit wird ein Einsatz der Plattformwaage auch in Umgebungen mit Staub- und Schmutzbelastungen ohne weiteres möglich, während dies bei der bekannten Ausführung durch die Vielzahl der Lagerstellen und damit schwierigen Abdichtung problematisch ist. Durch einen derartigen elastischen Ring etwa in Höhe der unteren Auflagerfläche des Abstützstempels wird außerdem zugleich eine Führung bzw. nachgiebige Zentrierung sowohl des die Querbeweglichkeit ermöglichenden Stempels als auch des Abstützfußes erreicht.

Die Ineinanderanordnung sowohl des Abstützstempels als auch des Abstützfußes innerhalb der Durchgangsbohrung des Kraftmeßzellen-Balkens ermöglicht eine sehr kompakte Baueinheit, so daß die Kraftmeßzelle mit ihrer Abstützung unmittelbar im Eckbereich der Plattformwaage angeordnet werden kann. Dadurch wird beim Auffahren beispielsweise eines Fahrzeuges auf eine derartige Plattformwaage ein Hochkippen der Waagbrücke zuverlässig verhindert, da praktisch kein wirksamer Hebelarm mehr vorhanden ist. Weitere vorteilhafte Ausführungen der erfindungsgemäßen Plattformwaage sind Gegenstand der abhängigen Ansprüche. Weitere Merkmale der vorliegenden Erfindung ergeben sich aus der nachfolgenden Beschreibung eines Ausführungsbeispiels anhand der Zeichnung. Es zeigen
Fig. 1 eine Seitenansicht der Plattformwaage;
Fig. 2 eine Draufsicht der Plattformwaage nach Fig. 1;
Fig. 3 einen vergrößerten Querschnitt durch die Mittelebene der Plattformwaage;
Fig. 4 einen Längsschnitt durch den Eckbereich der Plattformwaage gemäß Fig. 1.

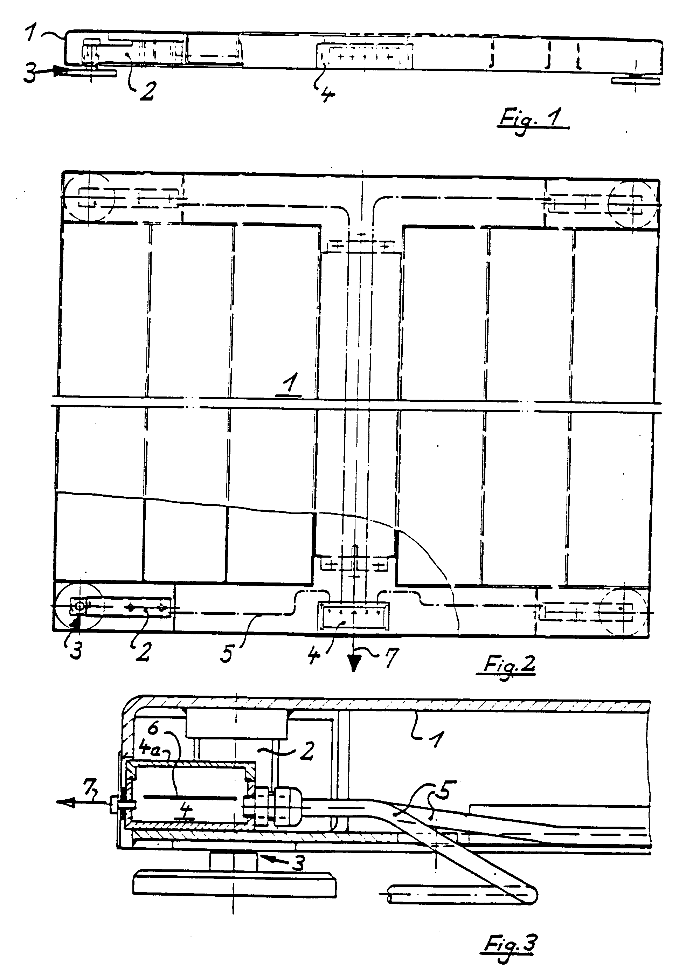

Die Fig. 1 zeigt eine Seitenansicht auf eine Plattformwaage mit einer Waagbrücke 1, die sich auf vier Kraftmeßzellen 2 abstützt. Diese wiederum stützen sich an Stützlagern 3 ab. Bei Belastung der Waagbrücke 1 werden die hier als Scherkraftgeber ausgebildeten Kraftmeßzellen 2 auf Scherung beansprucht und die dabei hervorgerufenen Dehnungen beispielsweise mit nicht näher gezeigten Dehnmeßstreifen an dem hier durch eine Ausrundung dargestellten abgeschwächten Querschnitt erfaßt. Die Meßwerte werden mittels Verbindungsleitungen 5 einem Anschlußkasten 4 zugeführt, der diese auswertet und anzeigt bzw. einer weiteren Anzeige und Auswertevorrichtung, beispielsweise einem Monitor oder einem Registraturrechner zuführt.

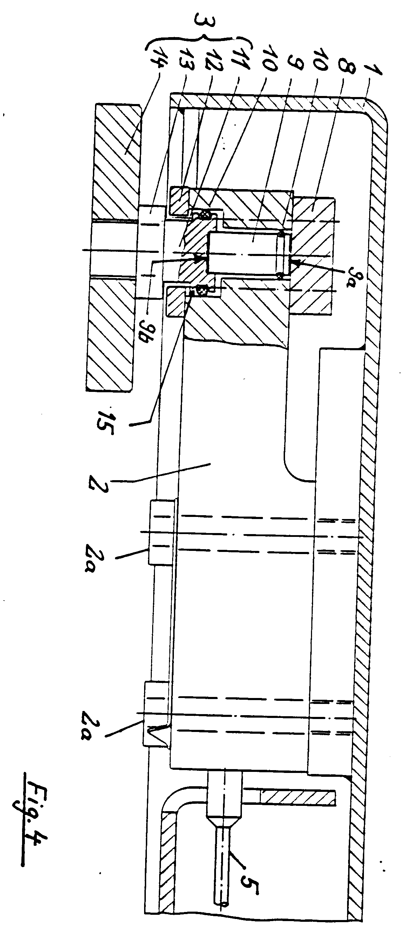

Fig. 2 zeigt die entsprechende Draufsicht gemäß Fig. 1, wobei die Waagbrücke 1 hier auf vier Kraftmeßzellen 2, die im jeweiligen Eckbereich der Waagbrücke 1 angeordnet sind, abgestützt ist. Die Waagbrücke 1 ist mit nicht näher bezeichneten Verstrebungen versehen, in deren Hohlräumen die Kraftmeßzellen 2 und die Verbindungsleitungen 5 zum Anschlußkasten 4 untergebracht sind. Die Verbindungsleitungen 5 sind dabei in weiten Schleifen verlegt, so daß ein Herausziehen und/oder ggf. Herausklappen oder Herausschwenken des Anschlußkastens 4 gemäß dem Pfeil 7 ermöglicht wird. Dies ist in Fig. 3 vergrößert dargestellt. Der Anschlußkasten 4 ist hierbei schubladenartig ausgebildet und gemäß dem Pfeil 7 aus der Waagbrücke 1 herausziehbar, so daß die im Anschlußkasten 4 untergebrachte Schaltungsplatine 6 zum meßtechnischen Zusammenfassen der einzelnen Kraftmeßzellen 2 zum Abgleich und zur Justage von oben her gut zugänglich ist. Hierzu kann der Anschlußkasten 4 mit einem Deckel 4a versehen sein. In Fig. 3 ist zudem die unmittelbare, starre Anordnung der Kraftmeßzelle 2 ohne weitere Lagerstelle an der Waagbrücke 1, sowie die stützfußartige Ausbildung der Stützlager 3 ersichtlich.

Fig. 4 zeigt einen Längsschnitt durch die Waagbrücke 1, an der die Kraftmeßzelle 2 mittels der Schrauben 2a befestigt ist. Zum hier links gelegenen Ende der Waagbrücke 1 hin ist die Kraftmeßzelle 2 mit einem abgeschwächten Querschnitt versehen, in deren Bereich ein hier nicht dargestellter Dehnmeßstreifen zur Aufnahme der Belastung angeordnet ist. Die Ausgabe der Meßdaten erfolgt über die hier nach rechts weisende Verbindungsleitung 5, die zum Anschlußkasten 4 führen soll. An dem balkenartig hier nach links auskragenden Teil der Kraftmeßzelle 2 ist auf der Oberseite eine Gegenplatte 8 aufgeschraubt, die einen innerhalb einer Bohrung der Kraftmeßzelle 2 begrenzt querbeweglich angeordneten Abstützstempel 9 beaufschlagt. An der Unterseite des Abstützstempels 9 stützt sich dieser auf einer Stellschraube 11 ab, die zusammen mit einer Kontermutter 13 und einer Fußplatte 14 das Stützlager 3 bilden. Auf die Höhenverstellbarkeit des Stützlagers 3 kann jedoch auch verzichtet werden. Mittels eines Klemmringes 12 ist die Stellschraube 11 gegen Verlieren bei Abheben der Waagbrücke 1 gesichert.

Wesentlich ist hier die Anordnung des Abstützstempels 9 mit einem Ringspalt 15 innerhalb der Kraftmeßzelle 2. Das damit ermöglichte Spiel dient zum Ausgleich von äußeren Querkräften und damit zur Reduzierung von Meßwertverfälschungen, die insbesondere durch statische Überbestimmung oder Waagbrückendurchbiegungen entstehen. Zur sicheren Zentrierung und gleichzeitigen Abdichtung dieser beweglichen Teile sind hier zwei O-Ringe 10 in dem Ringspalt 15 vorgesehen. Zur Querbeweglichkeit der Waagbrücke 1 sind die oberen und unteren Stirnflächen 9a und 9b der Abstützstempel 9 abgerundet ausgebildet, insbesondere kalottenartig ausgeführt, so daß sich eine Abrollbewegung an der Gegenplatte 8 und der Oberseite der Stellschraube 11 ergeben kann. Durch die insbesondere gehärtete Ausführung des Abstützstempels 9 und der Auflagerflächen 9a an der Gegenplatte 8 bzw. 9b an der Stellschraube 11 ergibt sich gegenüber den sonst verwendeten Gummilagerungen oder Schwingmetallen somit eine sehr geringe Reibung und entsprechend geringe Meßwertverfälschung, sowie durch die abgerundeten Auflagerflächen eine Selbstrückstellung der Waagbrücke 1 unter Last.

Der Abstützstempel 9 kann dabei auch kugelartig ausgebildet sein und somit reibungsarm auf dem Stützlager 3 als Widerlager (Auflager) für die Kraftmeßzelle 2 abrollen. Dabei dient der Klemmring 12 als Anschlag für eine lediglich begrenzte Beweglichkeit der Waagbrücke 1 und der damit festverbundenen Kraftmeßzellen 2 gegenüber den ortsfesten Stützlagern 3.Gegebenenfalls können bei großen Querkräften, wie z. B. Bremsvorgängen auf der Plattformwaage auch außerhalb der Waagbrücke 1 angeordnete Anschläge vorgesehen sein.

Als Kraftmeßzelle 2 eignen sich besonders die hier dargestellten Scherkraftgeber, deren auskragender Biegebalken sich bis direkt in die Ecke der Waagbrücke 1 erstrecken kann und an seinem Ende die Aufnahmebohrung sowohl für den Abstützstempel 9 als auch für die Stellschraube 11 unter Bildung des Ringspaltes 15, aufweist.

## Patentansprüche

1. Plattformwaage mit im Eckbereich einer Waagbrücke (1) angeordneten Kraftmeßzellen (2) und diesen jeweils zugeordneten Abstützstempeln (9) mit Abstützfüssen (11), auf die sich die Waagbrücke (1) abstützt, die relativ zu den Abstützfüssen (11) begrenzt querbeweglich ist, dadurch gekennzeichnet, daß jeweils der Abstützstempel (9) der Länge nach innerhalb einer Durchgangsbohrung oder einer abgestuften Durchgangsbohrung der Kraftmeßzelle (2) unter Bildung eines Ringspalts (15) angeordnet ist und sich gegen eine von oben aufgesetzte Gegenplatte (8) abstützt.

2. Plattformwaage nach Anspruch 1, wobei die Kraftmeßzellen (2) mit einem Anschlußkasten (4) mit zentraler Wägedatenerfassung und ggf. -auswertung verbunden sind, dadurch gekennzeichnet, daß der Anschlußkasten (4) an einer Umfangsfläche der Waagbrücke (1) vorgesehen ist und schubladenartig herausziehbar oder -klappbar ist.

3. Plattformwaage nach Anspruch 1, dadurch gekennzeichnet, daß im Ringspalt (15) ein zwischen Innenfläche der Durchgangsbohrung der Kraftmeßzelle (2) und Außenfläche des Abstützstempels (9) angeordneter elastischer Ring (10) eingefügt ist.

4. Plattformwaage nach Anspruch 3, dadurch gekennzeichnet, daß der elastische Ring (10) etwa in Höhe der unteren Auflagerfläche (9b) zwischen Abstützstempel (9) und dem Abstützfuß (11) angeordnet ist.

5. Plattformwaage nach einem der Ansprüche 1 bis 4, dadurch gekennzeichnet, daß der Abstützstempel (9) und/oder der Abstützfuß (11) mittels ineinandergreifender Formen und Gegenformen, insbesondere mittels eines Klemmringes (12) unverlierbar in der Kraftmeßzelle (2) gehalten ist.

6. Plattformwaage nach einem der Ansprüche 1 bis 5, dadurch gekennzeichnet, daß die Kraftmeßzelle (2) als Scherkraftgeber ausgebildet ist, dessen Biegebalken auf den Eckbereich der Waagbrücke (1) ausgerichtet ist und an seinem Ende die Durchgangsbohrung aufweist, in der unter Bildung des Ringspaltes (15) der Abstützstempel (9) und der Abstützfuß (11) angeordnet sind.

7. Plattformwaage nach Anspruch 5, dadurch gekennzeichnet, daß der Klemmring (12) als Anschlag für die begrenzte Querbeweglichkeit vorgesehen ist.

8. Plattformwaage nach einem der Ansprüche 1 bis 7, dadurch gekennzeichnet, daß der Abstützstempel (9) abgerundete Auflagerflächen (9a, 9b) aufweist.

9. Plattformwaage nach einem der Ansprüche 1 bis 8, dadurch gekennzeichnet, daß die Gegenplatte (8) gehärtet ist und auf die Kraftmeßzelle (2) aufgeschraubt ist.

## Claims

1. Platform balance including force measuring cells (2) arranged in the corner region of a weighing bridge (1) and having associated therewith support pins (9) with support bases (11), on which the weighing bridge (1) supports, which is partially movable in lateral direction relative to the support bases (11), characterized in that each support pin (9) is longitudinally arranged within a passage bore or a stepped passage bore of the force measuring cell (2) by forming an annular gap (15) and is supported against a counter plate (8) being put thereon from above.

2. Platform balance according to claim 1, wherein the force measuring cells (2) are connected to a connection box (4) with central weighing data determination and, if need be, a data evaluation, characterized in that the connection box (4) is arranged at a peripheral wall of the weighing bridge (1) and is slidable or pivotal outwardly in a drawer-like manner.

3. Platform balance according to claim 1, characterized in that an elastical ring (10) is inserted in the annular gap (15) being arranged between the inner surface of the passage bore of the force measuring cell (2) and the outer surface of the support pin (9).

4. Platform balance according to claim 3, characterized in that the elastic ring (10) is arranged between support pin (9) and the support base (11) at a level of the lower support surface (9b).

5. Platform balance according to one of claims 1 to 4, characterized in that the support pin (9) and/or the support base (11) are fixed in the force measuring cell (2) by means of engaging forms and counter forms, particularly by means of a clamping ring (12) in a non-losable manner.

6. Platform balance according to one of claims 1 to 5, characterized in that the force measuring cell (2) is formed as a shear beam transducer, the shear beam thereof is directed to the corner region of the weighing bridge (1) and including at its end a passage bore, in which the support pin (9) and the support base (11) are arranged by forming the annular gap (15).

7. Platform balance according to claim 5, characterized in that the clamping ring (12) is provided as stop for the restricted movability in lateral direction.

8. Platform balance according to one of claims 1 to 7, characterized in that the support pin (9) comprises spherical support surfaces (9a, 9b).

9. Platform balance according to one of claims 1 to 8, characterized in that the counter-plate (8) is hardened and is screw-fixed to the force measuring cell (2).

## Revendications

1. Pont-bascule comprenant des capteurs dynamométriques (2) disposés dans la région des coins d'une plate-forme de pesage (1) et des plots d'appui (9) gui sont à chaque fois associés à ceux-ci et gui comportent des pieds d'appui (11) sur lesquels s'appuie la plate-forme de pesage (1), celle-ci étant mobile transversalement d'une manière limitée par rapport aux pieds d'appui (11), caractérisé par le fait que chaque plot d'appui (9) est disposé dans le sens de la longueur à l'intérieur d'un perçage traversant ou d'un perçage traversant étagé du capteur dynamométrique (2) en formant un interstice annulaire (15), et qu'il s'appuie sur une contre-plaque (8) gui est posée depuis le haut.

2. Pont-bascule selon la revendication 1, dans lequel les capteurs dynamométriques (2) sont reliés à une armoire de raccordement (4) comprenant une unité centrale de saisie et, le cas échéant, d'exploitation des données du pesage, caractérisé par le fait que l'armoire de raccordement (4) est prévue sur une surface du pourtour de la plate-forme de pesage (1), et qu'elle peut être retirée par coulissement ou par basculement à la manière d'un tiroir.

3. Pont-bascule selon la revendication 1, caractérisé par le fait qu'une bague élastique (10) est insérée dans l'interstice annulaire (15) en étant disposée entre la surface intérieure du perçage traversant du capteur dynamométrigue (2) et la surface extérieure du plot d'appui (9).

4. Pont-bascule selon la revendication 3, caractérisé par le fait que la bague élastique (10) est disposée entre le plot d'appui (9) et le pied d'appui (11), à peu près au niveau de la surface d'appui inférieure (9b).

5. Pont-bascule selon l'une des revendications 1 à 4, caractérisé par le fait que le plot d'appui (9) et/ou le pied d'appui (11) est maintenu d'une manière imperdable dans le capteur dynamométrique (2) au moyen de formes et de formes conjuguées gui s'interpénètrent, et en particulier au moyen d'une bague de serrage (12).

6. Pont-bascule selon l'une des revendications 1 à 5, caractérisé par le fait que le capteur dynamométrique (2) est réalisé sous la forme d'un capteur de forces de cisaillement dont la poutre de flexion est alignée sur la région des coins de la plate-forme de pesage (1) et comporte à son extrémité le perçage traversant dans lequel le plot d'appui (9) et le pied d'appui (11) sont disposés en formant l'interstice annulaire (15).

7. Pont-bascule selon la revendication 5, caractérisé par le fait que la bague de serrage (12) est prévue sous la forme d'une butée destinée à limiter la mobilité transversale.

8. Pont-bascule selon l'une des revendications 1 à 7, caractérisé par le fait que le plot d'appui (9) comporte des surfaces d'appui (9a, 9b) qui sont arrondies.

9. Pont-bascule selon l'une des revendications 1 à 8, caractérisé par le fait que la contre-plaque (8) est durcie, et qu'elle est vissée sur le capteur dynamométrique (2).
